Europäisches Patentamt

European Patent Office

Office européen des brevets

(19)

(11) Publication number: **0 125 326 B1**

(12) **EUROPEAN PATENT SPECIFICATION**

(45) Date of publication of patent specification: **09.09.87**

(51) Int. Cl.⁴: **G 21 C 1/00**

(21) Application number: **83104721.2**

(22) Date of filing: **13.05.83**

(54) Nuclear reactor.

(43) Date of publication of application:
**21.11.84 Bulletin 84/47**

(45) Publication of the grant of the patent:
**09.09.87 Bulletin 87/37**

(84) Designated Contracting States:
**BE DE FR GB IT SE**

(56) References cited:
**DE-A-2 143 494**
**FR-A-2 382 747**
**GB-A- 907 816**
**US-A-2 990 349**

(73) Proprietor: **WESTINGHOUSE ELECTRIC CORPORATION**
**Westinghouse Building Gateway Center**
**Pittsburgh Pennsylvania 15222 (US)**

(72) Inventor: **Veronesi, Luciano**
**102 Glenn David Drive**
**Blawnox Pennsylvania (US)**
Inventor: **Garner, Daniel C.**
**3294 Woodhaven Drive**
**Murrysville Pennsylvania (US)**
Inventor: **Kimbrell, James E.**
**107 Lewis Drive**
**Pittsburgh Pennsylvania (US)**
Inventor: **Boyd, Charles H.**
**592 Surfside Drive**
**Pittsburgh Pennsylvania (US)**
Inventor: **Altman, David A.**
**1532 O'Block Road**
**Pittsburgh Pennsylvania (US)**
Inventor: **Sherwood, Donald G.**
**249 Lilac Drive**
**Monroeville Pennsylvania (US)**
Inventor: **Bost, Glenn E.**
**267 Picture Drive**
**Pittsburgh Pennsylvania (US)**

Courier Press, Leamington Spa, England.

**0 125 326**

(74) Representative: **Patentanwälte Dipl.-Ing. R. Holzer Dipl.-Ing. (FH) W. Gallo Philippine-Welser-Strasse 14 D-8900 Augsburg (DE)**

## Description

This invention relates to nuclear reactors and has particular relationship to reactors in which a coolant, typically water at critical temperature and pressure, is circulated through the nuclear core disposed in a reactor vessel. The core includes the fuel and is arranged in the lower region of the reactor vessel. In addition, the reactor includes control-rod assemblies. Control-rod assemblies include control rods, supports for the control rods, drive rods for a number of control rods and other related components. The core with its fuel assemblies is usually referred to as the lower internals of the reactor. The control rods and rod guides are referred to as the upper internals of the reactor. The control rods are movable between the upper internals and recesses or thimbles in the core by the drive rods.

The control rods are mounted in clusters on their drive rods by means of spiders. There are rod clusters (RCC's) in which the rods have a high absorption cross-section for neutrons. These clusters are used to reduce the power or shut down the reactor and are moved between the core and their guides a number of times during the fuel cycle of a reactor. There are so-called gray control rods of substantially lower neutron absorption cross-section than the high-absorption RCC's and they serve for load follow or to moderate or control the power of the reactor. Gray rods are moved between the core and the guides many times (typically 5,600), substantially more than the high-absorption RCC's during the fuel cycle of a reactor. There are further water displacement clusters (WDRC's). These rods are of the same diameter as the RCC's. They are used to maintain the amount of water coolant in the core relatively high during early operation of the reactor and to permit the amount of the water coolant in the core to increase during the later operation of the reactor by removal of the displacement rods. Such water displacement rod clusters are in the core typically during the first 60% of a fuel cycle, and are raised into the upper internals during the remainder, typically 40% of the fuel cycle.

Typically, the RCC's and the gray rods in their clusters are carried by cruciform supports and are movable inside of hollow cruciform guides. These guides conventionally have slots through which coolant flows. The WDRC's are not so produced. A large number of these tubes are movable in rectangular or square guides which conventionally have holes through which the coolant flows. During the later part of the fuel cycle, the WDRC's are moved into and remain in perforated guides. All guides are part of the upper internals of the reactor.

The coolant flows vertically through the core and into the upper internals. The outlet nozzles of the vessel are disposed between the ends of the upper internals and they cause the coolant to flow horizontally. The coolant then flows generally transversely through the control-rod assemblies in passing to the nozzles. Typically the vertical flow of the coolant through the core has a velocity of about 5 m/sec. The flow through the nozzles has a velocity of about 15 m/sec and the crossflow through some regions of the upper internals may be as high as 9 to 12 m/sec. At these velocities, the coolant causes the vertical members and particularly the WDRC's, during the later part of the fuel cycle, to vibrate.

The mechanisms which cause the vibrations include vortex shedding, turbulent buffeting, fluid-elastic interaction, and cavitation.

It has been proposed to support the control rods in a calandria structure disposed just above the core and provided with tubes for the reception and guidance of the control rods FR—A—2 382 747. In the calandria the cooling water from the core is conducted outwardly to radial discharge nozzles at relatively high crossflow speeds from which the control rods are protected by the tubes.

However, such a calandria is complicated since it requires installation of a large amount of closely spaced tubes, one for each control rod. The many tubes also restrict the radial flow area resulting in high flow velocities and a relatively large pressure drop.

It is therefore the principal object of this invention to provide an arrangement which has all the advantages of the described calandria design without its disadvantages.

With this object in view, the present invention resides in a nuclear reactor including a vessel, a nuclear core supported within said vessel, control-rod assemblies movably supported within said vessel and guided by vertical control-rod guide means arranged in a plenum above said core, and drive shafts connected to yoke members with control-rod assemblies supported thereon for moving said control rods into, and out of, said core, said vessel having at least one inlet nozzle for supplying a coolant to said core, the inflowing coolant after passing upwardly through said core flowing to outlet nozzles disposed in the side wall of said vessel, a calandria extending across said vessel above said core, said calandria including a plurality of hollow members mounted between an upper support plate and a lower support structure, which is perforate for permitting passage of the coolant flowing axially upwardly from said core and said calandria being radially open in communication with said outlet nozzle so that the coolant flowing into said calandria is permitted to flow transversely over the outer surfaces of said hollow members and out through said outlet nozzle without impinging on said drive rods, characterized in that said calandria is arranged sufficiently spaced above said core that said yoke member carrying said control rods is movable in the space between said calandria and the core and that said drive shafts extend through said hollow members to be guided thereby and to protect said drive shafts from the coolant flowing transversely over the outer surfaces of said hollow members to said outlet nozzles.

The invention will become more readily apparent from the following description of a preferred embodiment thereof shown, by way of example only, in the accompanying drawings, in which:

Figure 1 is a view in longitudinal section of a nuclear reactor in accordance with this invention;

Figure 2 is a view in longitudinal section of the barrel for the upper internals and the calandria of the reactor shown in Fig. 1;

Figure 3 is a fragmental plan view of the upper internals as seen from the direction III—III of Fig. 1;

Figure 4 is a fragmental plan view of the lower plate of the calandria as seen from the direction IV—IV of Fig. 1;

Figure 5 is a fragmental plan view of the upper plate of the calandria as seen from the direction V—V of Figure 1;

Figure 6 is a fragmental view in longitudinal section of the calandria; and

Figure 7 shows another embodiment of the invention in a nuclear reactor.

A nuclear reactor 11 includes a pressure vessel having a circularly cylindrical body 15 closed at the bottom by a spherical bowl 17. The vessel has a flanged dome-shaped head 19 which is bolted to the body at the flange 21. The body 15 has a plurality of inlet nozzles 23 and a plurality of outlet nozzles 25 distributed around its periphery. Typically, there are four inlet nozzles 23 interspaced in pairs between four outlet nozzles 25.

In the lower region of body 15 there is a nuclear core 27. This core includes fuel assemblies 29 and thimbles 31 for receiving control rods (not shown). The fuel assemblies 29 and thimbles 31 are mounted between upper core plate 33 and lower core plate 35. The control rods are mounted in clusters by means of a yoke member and include rod clusters (RCC's), which have a high absorption cross-section for neutrons, gray rod clusters, which have a lower absorption cross-section for neutrons, and water-displacement rod clusters (WDRC's). The RCC's serve to shut down the reactor or to reduce its thermal power output. The gray clusters serve for load follow control. The WDRC's displace the coolant in thimbles which do not receive RCC's or gray rod clusters. Such displacement takes place during the earlier part of the fuel cycle of the reactor, typically during about the first 60% of the fuel cycle.

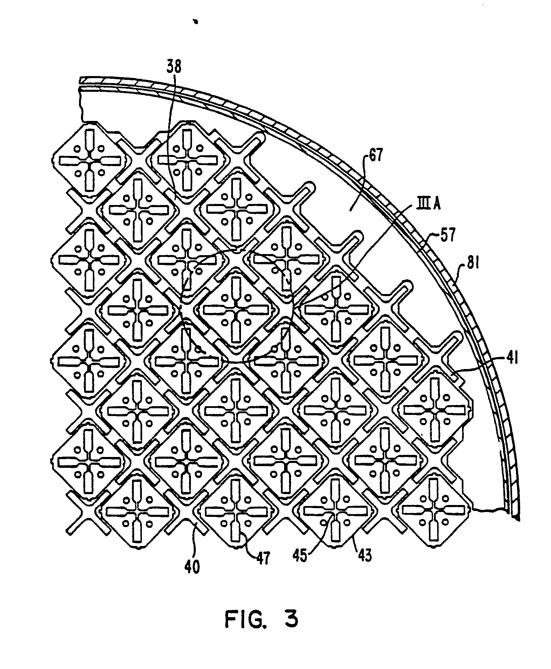

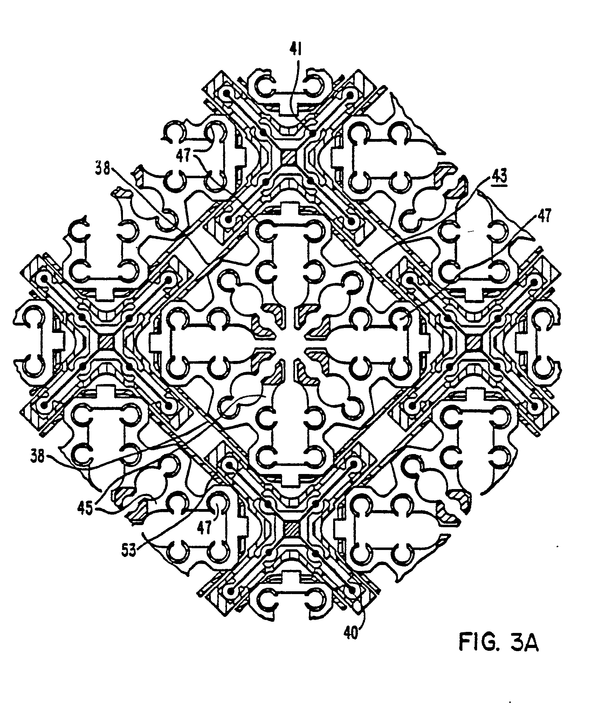

The upper part of the body 15 contains the upper internals 37 and the calandria 39. The upper internals 37 include the vertical guides 41 (Fig. 3) for the RCC's and gray control-rod clusters, and the vertical guides 43 for the WDRC's. The RCC's and gray control-rod clusters are mounted on cruciform structures 40 and the guides 41 for these rods are hollow cruciform cans. The guides 43 for the WDRC's are of generally rectangular or square cross-section with their corners truncated, and strictly may be described as octagonal cans. The sides 38 of the WDRC guides 43 are encompassed by projecting arms of four guides 41 and extend parallel to these arms. Plates 45 with coaxial holes 47 are vertically spaced internally along the guides 43. The plates 45 serve as supports for the can walls 38; the WDRC's extend through and are guided in the holes 47. The vertical side walls 49 and 51 of the guides 41 and 43 are substantially imperforate but the guides are open at their tops and bottoms. There may be small holes 53 and 55 in the guides 41 and 43 for the purpose of stabilizing or equalizing the pressure of the coolant.

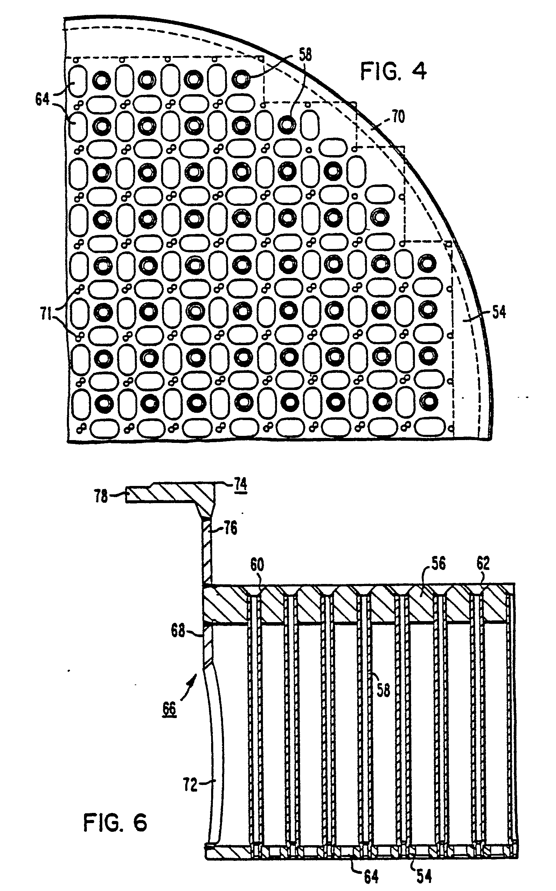

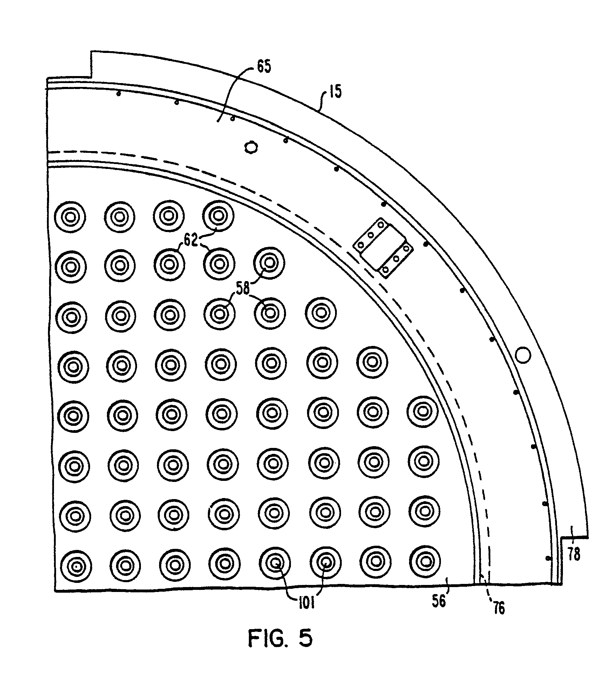

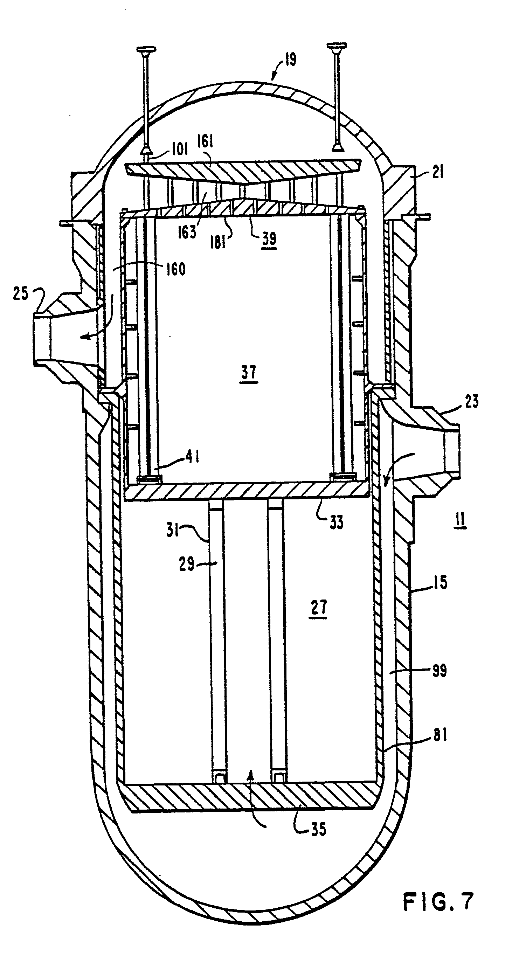

The calandria 39 (Fig. 6) includes a lower generally horizontal support plate 54 (Fig. 4) and an upper generally horizontal support plate 56 (Fig. 5), between which generally vertical hollow members 58 are supported. The hollow members 58 typically are tubes of circular cross-section. They are secured by fillet welds 60 (Fig. 6) in counterbores 62 in the upper plate 56 and pass through the lower plate 54. The hollow members 58 are slightly tapered where they join the lower plate 54. The lower plate 54 has holes 64 typically of oval shape. Each hollow member 58 is surrounded by four holes 64. The plate 54 also has pin holes 71 which serve to center the guides 41 and 43. The guides have pins (not shown) at the top which enter holes 71.

The lower and upper plates 54 and 56 are circular and the hollow members 58 are substantially uniformly spaced in the circularly cylindrical volume defined between the plates 54 and 56. The plates are surrounded by a shell 66 (Fig. 6), which is of composite structure and includes a lower section 68 containing openings 72 which are coaxial with the openings 61 in the barrel 57 and which are spaced to mate with the openings 61.

A supporting cylinder or shell 74 extends from the upper support plate 56 and includes an upper cylindrical section 76 and a flange member 78. The section 76 is welded at its lower end to the upper plate 56 and the flange member 78 is welded to the upper end of the section 76.

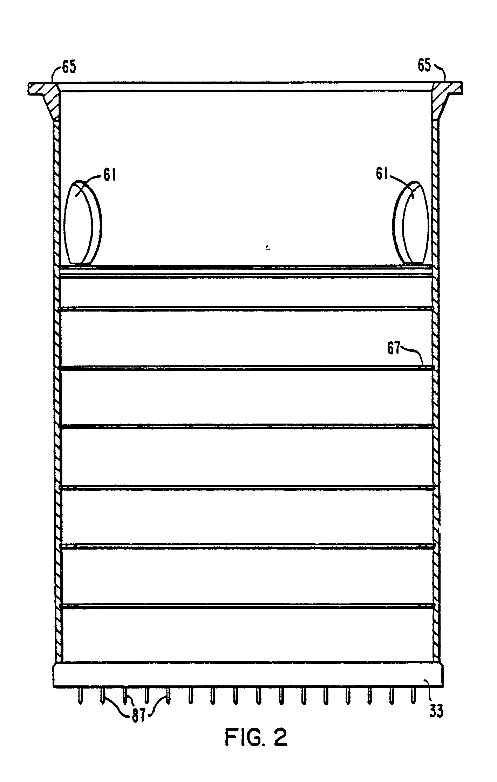

The upper internals 37 and the calandria 39 are contained in a barrel 57 (Fig. 2). The barrel 57 is circularly cylindrical and it has holes 61 below the top which are shaped to mate with the rims of contiguous outlet nozzles 25 and with the holes 72 in the shell 66 of the calandria. The barrel 57 has a flange 65 at the top; at its lower end the barrel 57 supports the upper core plate 33.

The guides 41 and 43 are closely packed except near the periphery. Coolant flowing from the core 27 into the spaces between the guides therefore has a high velocity and tends to flow towards the periphery. The pressure of this coolant decreases from the bottom of the upper internals 37 to the top. To suppress transverse flow of coolant under the pressure between the closely spaced guides 41 and 43 and the relatively free volume at the periphery of the upper internals 37, horizontal former plates 67 extend along the barrel 57

The core 27, upper internals 37 and calandria 39 are enclosed in an outer barrel 81. The lower core plate 35 is mounted on the lower end of this barrel 81. At its upper end the barrel 81 has a flange 85.

The barrel 81 has openings located and shaped to mate with the boundaries of the openings 61 in the calandria shell 66 and coaxial with the contiguous outlet nozzles 25.

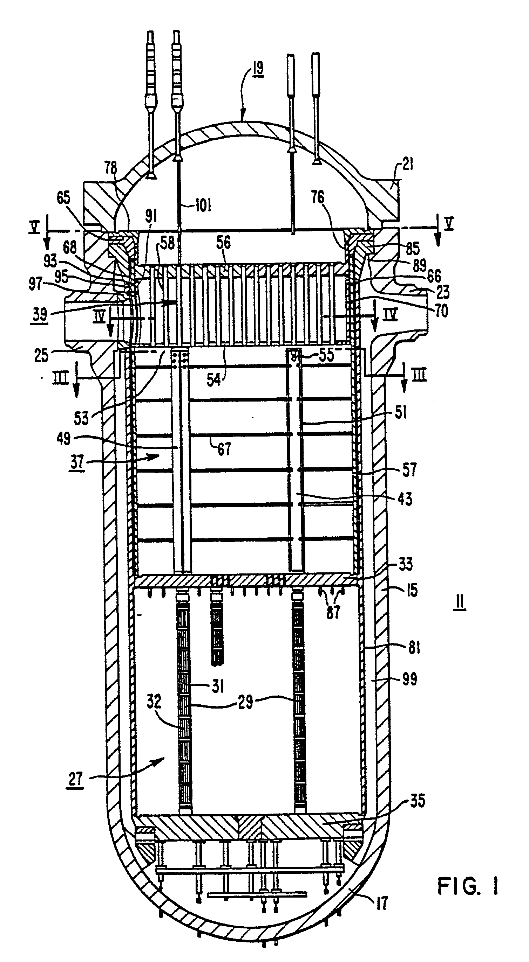

The core 27, the upper internals 37, and the calandria 39 are mounted generally coaxially. The upper core plate 33 has pins 87 (Figs. 1, 2) which engage and center the fuel elements 29. The cylinder 76 and the shell 60, the barrel 57 and the barrel 81 are mounted generally coaxially with each other and with the core 27, the upper internals 37 and the calandria 39. The flange 85 rests on a ledge 89 in the inner surface of body 15. The flange 65 of barrel 57 is above flange 85 and a spring (not shown) is interposed between these flanges. The flange 78 is disposed upon flange 65. The shell 66, the barrel 57 and the barrel 85 are oriented circumferentially so that the boundaries 91 and 93 of the openings 72 and 61 mate with each other, the boundaries 93 (Fig. 1) of the openings 61 in barrel 57 mate with the boundaries 95 of the openings in barrel 81, and the boundaries 95 of the openings in barrel 81 mate with the inner rims 97 of the outlet nozzles 25. The annulus 99 between the barrel 81 and the body 15 provides for communication between the inlet nozzles 23 and the lower end of the core 27. The coolant which enters through the inlet nozzles 23 flows down through the annulus 99 into bowl 17, thence up through the core 27 and straight up through the upper internals 37 into the calandria 39 where it flows generally transversely to and through the outlet nozzles 25. The joints between the boundaries 91, 93 and 93, 95 and between the boundaries 95 and the rims 97 form pressure-tight seals at the outlet nozzles so that there is minimal or no by-pass flow of the coolant from the annulus 99 directly through the outlet nozzles 25.

As shown, the outflow channels of the outlet nozzles 25 are just above the upper internals and substantially at the level of the hollow members 58 of the calandria 39 so that the coolant which passes through the calandria flows directly out of the outlet nozzles 25. The lower plate 54 of the calandria 39 is mounted contiguous to the top of the upper internals 37 and the coolant flows into the calandria through the openings in guides 41 and 43, through the spaces between these guides and through the gaps between the formers 67 and the periphery 69 of the upper internals. The calandria 39 serves as upper support for the upper internals. The drive rods 101 (Fig. 5) for the control rods pass through the hollow members 58 of the calandria and are protected by these members from the coolant flowing radially outwardly to the outlet nozzles 25 at high flow velocities.

The plates 54 and 56 and the hollow members 58 of the calandria are composed of stainless steel. The outlet nozzles 25, typically, are about 1 m in diameter. The hollow members 58, typically, have an outer diameter of 8.8 cm, an inner diameter of 5.5 cm and a length of about 125 cm. With the hollow members 58 of this structure supported at both ends by the plates 54 and 56, the stresses produced by the transverse flow of the coolant even at a velocity of 13 m/sec is minimized and failure of the hollow members is precluded.

While preferred embodiments of the invention have been disclosed herein, many modifications thereof are feasible. It is, for example, possible to arrange the discharge nozzle at a lower elevation which permits a reduction in vessel height and also provide for more equalized radial outflow of reactor coolant through the calandria, however, at a greater pressure drop. Such an arrangement is shown in Fig. 7 wherein functionally similar components are identified by numerals corresponding to Fig. 1. As shown in this Fig. (7), the calandria is funnel-shaped in cross-section with radially outwardly increasing flow cross-section to cause a substantial reduction of the coolant flow speed where its flow direction is turned downwardly to the outlet nozzles 25. In both arrangements, however, the control rods and control-rod drives are protected from the outwardly directed high speed coolant flow since, within the calandria in which such radial flow takes place, the drive rods are disposed within contiguous protective tubes and in the area below the calandria there is no radial but only axial flow which does not cause rod vibration.

It is also noted that the calandria when arranged above the travel area of the control rods, that is, above the rod clusters when removed from the core 27, requires only a relatively small amount of tubes 58 corresponding to the amount of drive rods as compared to a calandria structure arranged directly above the core 27 which would require a tube for each control rod.

As shown in Fig. 7, the outlet nozzles 25 may be placed lower than the calandria 39 so that radial coolant flow out of the calandria is first turned downwardly into annular space 160 before entering the radial outlet nozzle 25. In this arrangement, radial outflow out of the calandria is more even but the flow has to turn downwardly at the outer circumference of the calandria and then again outwardly into the outlet nozzles 25. As shown in Fig. 7, the calandria 39 may have bottom and top plates 181 and 161 so shaped that the space 163 therebetween diverges in flow direction so that the coolant flow at the outer circumference of the calandria is relatively slow so as to cause only a relatively small pressure drop at its turning point. It may also be noted from Fig. 7 that, with this arrangement, the calandria 39, which as shown, is supported on its lower support plate 181, extends into the reactor head 19 which permits the use of a reactor vessel of lower height than with the arrangement as shown in Fig. 1.

## Claims

1. A nuclear reactor including a vessel (15), a nuclear core (27) supported within said vessel (15), control-rod assemblies movably supported within said vessel (15) and guided by vertical control-rod guide means (43) arranged in a plenum above said core (27), and drive shafts (101) connected to yoke members with control-rod assemblies supported thereon for moving said control rods into, and out of, said core (27), said vessel (15) having at least one inlet nozzle (23) for supplying a coolant to said core (27), the inflowing coolant after passing inwardly through said core (27) flowing to outlet nozzles (25) disposed in the side wall of said vessel (15), a calandria (39) extending across said vessel (15) above said core (27), said calandria (39) including a plurality of hollow members (58) mounted between an upper support plate (56) and a lower support structure (54), which is perforate for permitting passage of the coolant flowing axially upwardly from said core (27) and said calandria (39) being radially open in communication with said outlet nozzle (25), characterized in that said calandria is arranged sufficiently spaced above said core, that said yoke member carrying said control rods is movable in the space between said calandria (39) and the core (27) and that said drive shafts (101) extend through said hollow members (58) to be guided thereby and to protect said drive shafts (101) from the coolant flowing transversely over the outer surfaces of said hollow members (58) to said outlet nozzles (25).

2. A nuclear reactor as claimed in claim 1, characterized in that said outlet nozzle (25) is so spaced with respect to said calandria that there is no substantial pressure drop between the coolant flowing out of the calandria and the coolant flowing into said outflow channel.

3. A nuclear reactor as claimed in any of claims 1 to 2, characterized in that said calandria (39) includes a supporting cylinder (66) having a flange (78) at its top, the flange (78) of the cylinder (66) being secured between the head (19) and the body (15) of the reactor vessel.

4. A nuclear reactor as claimed in claim 3, characterized in that vessel body (15) has an internal ledge (89), and that the upper internals (37), the core (27) and a substantial portion of the calandria (39) are encircled by a first barrel (81) having a first flange (85) disposed on said ledge (89) and the upper internals and the calandria are encircled by a second barrel (57) having a second flange (65) disposed on said first flange (85) and the calandria has its flange (78) disposed on said second flange (65), said first, second and calandria flanges (85, 65, 78) being compressed between the ledge (89) and the vessel head (19).

5. A nuclear reactor as claimed in any of claims 1 to 4, characterized in that said outlet nozzle (25) is in radial alignment with said calandria (39) such that radial outward flow of coolant out of said calandria (39) may enter said outlet nozzle (25) without deflection.

6. A nuclear reactor as claimed in claim 1 or 2, characterized in that said outlet nozzle (25) is arranged in the reactor vessel substantially below said calandria (39) and an annular flow path (160) is provided between the circumference of said calandria (39) and said outlet nozzle (25) so as to conduct coolant from said calandria (39) to said outlet nozzle (25).

7. A nuclear reactor as claimed in claim 6, characterized in that the upper and lower horizontal calandria plates (161, 181) are shaped so as to define a radially outwardly diverging flow path whose flow cross-section substantially increases towards the periphery of the calandria (39).

8. A reactor as claimed in claim 6 or 7, characterized in that said calandria (39) is supported at its lower support plate (181) and extends into the reactor vessel head (19).

9. A reactor as claimed in any of claims 1 to 8, characterized in that said calandria (39) serves as the upper support for the upper internals of the reactor.

**Patentansprüche**

1. Kernreaktor mit einem Behälter (15), einem in dem Behälter (15) gehalterten Reaktorkern (27), innerhalb des Behälters (15) beweglich gehalterten Steuerstab-Baugruppen, die durch in einem Raum oberhalb des Reaktorkerns (27) angeordnete vertikale Steuerstabführungsmittel (43) geführt sind, und Antriebsstangen (101), die mit Jochteilen mit daran gehaltenen Steuerstab-Baugruppen verbunden sind, zum Bewegen der Steuerstäbe in den und aus dem Reaktorkern (27), wobei der Bahälter (15) mindestens einen Einlaßstutzen (23) zur Zufuhr eines Kühlmittels zum Reaktorkern (27) aufweist und das einströmende Kühlmittel, nachdem es nach oben durch den Reaktorkern (27) hindurchgeströmt ist, zu in der Mantelwand des Behälters (15) angeordneten Auslaßstutzern (25) strömt, und wobei eine Röhrenanordnung (39) sich oberhalb des Reaktorkerns (27) quer durch den Behälter (15) erstreckt und diese Röhrenanordnung (39) eine Vielzahl hohler Bauteile (58) enthält, die zwischen einer oberen Tragplatte (56) und einer unteren Tragkonstruktion (54) eingebaut sind, die zur Ermöglichung des Durchtritts des aus dem Reaktorkern (27) axial nach oben strömenden Kühlmittels perforiert ist, und wobei die Röhrenanordnung (39) radial offen ist und in Verbindung mit den Auslaßstutzen (25) steht, dadurch gekennzeichnet, daß die Röhrenanordnung mit ausreichendem Abstand oberhalb des Reaktorkerns angeordnet ist, so daß die die Steuerstäbe tragenden Jochteile in dem Raum zwischen der Röhrenanordnung (39) und dem Reaktorkern (25) bewegbar sind, und daß die Antreibsstangen (101) durch die hohlen Bauteile (58) hindurchverlaufen, um die Antriebsstangen (101) darin zu führen und gegen das quer über die Mantelflächen der hohlen Bauteile (58) zu den Auslaßstutzen (25) strömende Kühlmittel zu schützen.

2. Kernreaktor nach Anspruch 1, dadurch gekennzeichnet, daß die Auslaßstutzen (25) so mit Abstand von der Röhrenanordnung angeordnet ist, daß kein wesentlichen Druckabfall zwischen den aus der Röhrenanordnung ausströmenden Kühlmittel und dem in den Auslaßkanal ausströmenden Kühlmittel auftritt.

3. Kernreaktor nach Anspruch 1 oder 2, dadurch gekennzeichnet, daß die Röhrenanordnung (39) einen Tragzylinder (66) mit einem Flansch (78) an seinem oberen Ende aufweist und daß der Flansch (78) des Zylinders (66) zwischen dem Deckel (19) und dem Hauptkörper (15) des Reaktorbehälters befestigt ist.

4. Kernreaktor nach Anspruch 3, dadurch gekennzeichnet, daß der Behälter (15) einen inneren Sims (89) aufweist und daß die oberen Einbauten (37), der Reaktorkern (27) und ein wesentlicher Teil der Röhrenanordnung (39) von einem ersten Mantel (81) umschlossen sind, der einen ersten Flansch (85) aufweist, der auf dem genannten Sims (89) aufliegt, und daß die oberen Einbauten und die Röhrenanordnung von einem zweiten Mantel (57) umschlossen sind, der einen auf dem genannten ersten Flansch (85) aufliegenden zweiten Flansch (65) aufweist, und daß der Flansch (78) der Röhrenanordnung auf dem genannten zweiten Flansch (65) aufliegt, wobei der erste Flansch, der zweite Flansch und der Röhrenanordnungsflansch (85, 65, 78) zwischen dem Sims (89) und dem Behälterdeckel (19) eingespannt sind.

5. Kernreaktor nach einem der Ansprüche 1 bis 4, dadurch gekennzeichnet, daß die Auslaßstutzen (25) radial fluchtend mit der Röhrenanordnung (39) angeordnet sind, so daß der radiale Auswärtsstrom des Kühlmittels aus der Röhrenanordnung (39) ohne Umlenkung in die Auslaßstutzen (25) eintreten kann.

6. Kernreaktor nach Anspruch 1 oder 2, dadurch gekennzeichnet, daß die Auslaßstutzen (25) am Reaktorbehälter im wesentlichen unterhalb der Röhrenanordnung (39) angeordnet sind und daß ein ringförmiger Strömungsweg (160) zwischen dem Umfang der Röhrenanordnung (39) und den Auslaßstutzen (25) vorgesehen ist, um das Kühlmittel aus der Röhrenanordnung (39) in die Auslaßstutzen (25) zu leiten.

7. Kernreaktor nach Anspruch 6, dadurch gekennzeichnet, daß die oben und unten liegenden horizontalen Platten der Röhrenanordnung (161, 181) so gestaltet sind, daß sie einen radial auswärts divergierenden Strömungsweg bilden, dessen Strömungsquerschnitt zum Umfang der Röhrenanordnung (39) hin wesentlich zunimmt.

8. Kernreaktor nach Anspruch 6 oder 7, dadurch gekennzeichnet, daß die Röhrenanordnung (39) an ihrer unteren Tragplatte (181) gehaltert ist und in den Reaktorbehälterdeckel (19) hineinragt.

9. Kernreaktor nach einem der Ansprüche 1 bis 8, dadurch gekennzeichnet, daß die Röhrenanordnung (39) als obere Halterung für die oberen Reaktoreinbauten dient.

**Revendications**

1. Réacteur nucléaire comprenant une cuve (15), un coeur nucléaire (27) supporté à l'intérieur de la cuve (15), des assemblages de barres de contrôle supportés de façon mobile à l'intérieur de la cuve (15) et guidés par des moyens de guidage verticaux (43) de barres de contrôle, disposés dans un compartiment au-dessus du coeur (27), et des tiges d'entraînement (101) raccordées à des éléments de chape supportant des assemblages de barre de contrôle pour déplacer les dites barres de contrôle vers l'intérieur et vers l'extérieur du coeur (27), la cuve (15) ayant au moins une tubulure d'entrée (23) pour l'introduction d'un fluide de refroidissement dans le coeur (27), le fluide de refroidissement affluant s'écoulant, après traversée du coeur (27) dans le sens ascendant, vers des tubulures de sortie (25) disposées dans la paroi latérale de la cuve (15), une calandre (39) s'étendant à travers la cuve (15) au-dessus du coeur (27), la calandre (39) comprenant une pluralité d'organes creux (58) montés entre une plaque de support supérieure (56) et une structure de support inférieure (54) qui est perforée pour permettre le passage du fluide de refroidissement s'écoulant axialement vers le haut depuis le coeur (27), et la calandre (39) étant radialement ouverte en communication avec la tubulure de sortie (25), caractérisé en ce que la calandre est disposée à une distance suffisante au-dessus du coeur, que l'élément de chape portant les barres de contrôle est déplaçable dans l'espace compris entre le calandre (39) et le coeur (27) et que les tiges d'entraînement (101) s'étendent à travers les organes creux (58) de façon à être guidées par ces derniers et à protéger les tiges d'entraînement (101) du fluide de refroidissement s'écoulant transversalement sur les surfaces extérieures des organes creux (58) vers les tubulures de sortie (25).

2. Réacteur nucléaire selon la revendication 1, caractérisé en ce que la tubulure de sortie (25) est située à une distance de la calandre telle qu'il n'existe pas de chute de pression notable entre le fluide de refroidissement s'écoulant de la calandre et le fluide de refroidissement s'écoulant dans le canal d'évacuation.

3. Réacteur nucléaire selon l'une des revendications 1 ou 2, caractérisé en ce que la calandre (39) comprend un cylindre de support (66) ayant une bride (78) à son sommet, la bride (78) du cylindre (66) étant fixée entre le couvercle (19) et le corps (15) de la cuve du réacteur.

4. Réacteur nucléaire selon la revendication 3, caractérisé en ce que le corps de cuve (15) présente un épaulement intérieur (89) et que les équipements internes supérieurs (37), le coeur (27) et une partie substantielle de la calandre (39) sont encerclés par une première enveloppe (81) ayant une première bride (85) disposée sur l'épaulement (89) et les équipements internes supérieurs et la calandre sont encerclés par une seconde enveloppe (57) ayant une seconde bride (65) disposée sur la première bride (85) et que la bride (78) de la calandre est disposée sur la seconde bride (65), les première, seconde et troisième brides (85, 65, 78) étant comprimées entre l'épaulement (89) et le couvercle de cuve (19).

5. Réacteur nucléaire selon l'une des revendications 1 à 4, caractérisé en ce que la tubulure de sortie (25) est en alignement radial avec la calandre (39), de sorte que le flux de fluide de refroidissement s'écoulant radialement vers l'extérieur de la calandre (39) peut pénétrer dans la tubulure de sortie (25) sans être dévié.

6. Réacteur nucléaire selon la revendication 1 ou 2, caractérisé en ce que la tubulure de sortie (25) est placée dans la cuve du réacteur sensiblement en-dessous de la calandre (39) et qu'un trajet d'écoulement annulaire (160) est prévu entre al circonférence de la calandre (39) et la tubulure de sortie (25), de façon à conduire le fluide de refroidissement depuis la calandre (39) jusqu'à la tubulure de sortie (25).

7. Réacteur nucléaire selon la revendication 6, caractérisé en ce que les plaques de calandre horizontales supérieur et inférieure (161, 181) sont profilées de façon à définir un trajet d'écoulement divergent radialement vers l'extérieur, dont la section transversale de débit augmente substantiellement vers la périphérie de la calandre (39).

8. Réacteur nucléaire selon la revendication 6 ou 7, caractérisé en ce que la calandre (39) est supportée au niveau de sa plaque de support inférieure (181) et se prolonge à l'intérieur du couvercle de cuve du réacteur (19).

9. Réacteur nucléaire selon l'une des revendications 1 à 8, caractérisé en ce que la calandre (39) sert de support supérieur aux éléments internes supérieurs du réacteur.

FIG. I

FIG. 2

FIG. 3

FIG. 3A

FIG. 4

FIG. 6

FIG. 5

6

FIG. 7